# EUROPÄISCHE PATENTSCHRIFT

(11) **EP 0 630 289 B1**
(45) Veröffentlichungstag und Bekanntmachung des Hinweises auf die Patenterteilung: **02.01.1997**
(21) Anmeldenummer: 93909364.7
(22) Anmeldetag: 08.04.1993
(51) Int. Cl.: B01J 23/64, B01D 53/44, B01D 53/62, B01D 53/86

(54) **KATALYTISCHE NACHVERBRENNUNG VON KOHLENMONOXID UND/ODER OXIDIERBARE ORGANISCHE VERBINDUNGEN ENTHALTENDEN ABGASEN**
CATALYTIC POST-COMBUSTION OF EXHAUST GASES CONTAINING CARBON MONOXIDE AND/OR OXIDISABLE ORGANIC COMPOUNDS
POSTCOMBUSTION CATALYTIQUE DE GAZ BRULES CONTENANT DE L'OXYDE DE CARBONE ET/OU DES COMPOSES ORGANIQUES OXYDABLES

(30) Priorität: 09.04.1992 DE 4212020
(43) Veröffentlichungstag der Anmeldung: 28.12.1994
(73) Patentinhaber: Consortium für elektrochemische Industrie GmbH, D-81379 München (DE)
(72) Erfinder: WENSKI, Guido, Portland, OR 97201 (US); HAMMER, Margit, D-8000 München 45 (DE)
(86) Internationale Anmeldenummer: EP9300873
(87) Internationale Veröffentlichungsnummer: WO9320936

(56) Entgegenhaltungen:
- EP-A- 0 174 495
- EP-A- 0 211 233
- EP-A- 0 432 534
- EP-A- 0 547 226
- DE-A- 1 417 648
- US-A- 4 238 370

## Beschreibung

Die Erfindung betrifft ein Verfahren für die katalytische Nachverbrennung von Kohlenmonoxid und/oder oxidierbare organische Verbindungen enthaltenden Abgasen aus der Phthalsäureanhydrid- oder Maleinsäureanhydrid-Produktion.

Oxidierbare gas-, dampf- oder partikelförmige Schadstoffe in Abgasen lassen sich durch Verbrennen beseitigen. Unter Bedingungen, die eine weitgehend vollständige Oxidation von Verunreinigungen zulassen, werden dabei chemisch gebundener Kohlenstoff und Wasserstoff in die lufthygienisch unbedenklichen Stoffe Kohlendioxid (CO₂) und Wasser (H₂O) überführt. Andere Abgasbestandteile, wie etwa Schwefel-, Stickstoff- oder Halogenverbindungen, werden bei der oxidativen Behandlung in Stoffe umgewandelt, die bei der Überschreitung zulässiger Emissionsgrenzwerte in einer der Verbrennung nachgeschalteten Reinigungsanlage, z. B. durch eine Abgaswäsche, eliminiert werden müssen. In der Praxis wird deshalb die Abgasverbrennung bevorzugt dort verwendet, wo im wesentlichen aus Kohlenstoff und Wasserstoff aufgebaute Verunreinigungen zu zerstören sind und wo ferner eine Verwertung rückgewonnener Abgasbestandteile nicht in Frage kommt oder andere Reinigungsverfahren unbefriedigend sind. (Ullmanns Encyklopädie der Technischen Chemie, "Verfahren und Geräte zur Abgasreinigung"; 4. Auflage, Verlag Chemie: Weinheim 1981, Bd. 6, S. 312)

In der Technik unterscheidet man zwischen thermischer Nachverbrennung (TNV) bei Temperaturen zwischen 600 und 1100°C und der aus energetischer Sicht günstigeren katalytischen Nachverbrennung (KNV) bei Temperaturen zwischen 250 und 500°C. Für die KNV sind einerseits Edelmetallkatalysatoren geeignet, die in der Regel aus auf einem hitzebeständigen Träger feinverteiltem Palladium, Platin und/oder Rhodium bestehen und besonders gegenüber schwefel- und schwermetallhaltigen Abluftströmen empfindlich sind; andererseits werden die resistenteren Mischoxidkatalysatoren eingesetzt, die beispielsweise Oxide von Vanadium, Wolfram, Kupfer, Mangan, Eisen und/oder Kobalt enthalten. Nach der Bauform unterteilt man die Katalysatoren in Vollkontakte (Homogenkontakte) und Trägerkontakte; bevorzugte Einsatzformen sind jeweils Schüttgut- und Wabenkörperkatalysatoren.

Ein Mischoxidkatalysator in Form von zylindrischen Pellets, aufgebaut aus 92 Gew.-% Co₃O₄ und 8 Gew.-% CeO₂, der für die Verbrennung geringer Xylolanteile in Abluftströmen Temperaturen von etwa 290°C benötigt, ist beispielsweise in der DE-OS 26 41 317 beschrieben.

Katalysatoren auf der Basis von TiO₂, bevorzugt in der Anatasmodifikation, und V₂O₅ lassen sich für eine Fülle von Partialoxidationsreaktionen in der Gasphase und darüber hinaus - bei Zudosierung von Ammoniak - zur Rauchgasentstickung nutzen. Die Gasphasenoxidation von o-Xylol und/oder Naphthalin zu Phthalsäureanhydrid (PSA) unter Verwendung von Vanadium- und Titan-haltigen Trägerkatalysatoren ist z. B. aus der DE-PS 14 42 590 und der DE-PS 21 06 796 bekannt. Nach der Desublimation der Reaktionsprodukte und einer sich gegebenenfalls anschließenden Wäsche der Prozeßluft enthalten die Abgase aus PSA-Produktionsanlagen trotz optimierter Reaktionsführung neben Reaktionswasser und Kohlendioxid u. a. noch Kohlenmonoxid, o-Xylol und/oder Naphthalin, o-Tolylaldehyd, Formaldehyd, Phthalsäureanhydrid und Maleinsäureanhydrid. Immer schärfere Umweltauflagen in einigen Ländern (z. B. die TA-Luft in der Bundesrepublik Deutschland) machen jedoch in vielen Fällen eine Nachreinigung solcher in die Umwelt gelangenden Abluftströme notwendig.

Die Verwendung eines TiO₂/V₂O₅-Katalysators zur Totaloxidation von organischen Verbindungen ist in der DE-OS 30 19 879 beschrieben: TiO₂ wird mit NH₄VO₃-Lösung imprägniert, das Produkt calciniert und durch eine Waschflüssigkeit von anhaftendem V₂O₅ befreit. Der Katalysator ist erst bei einer Betriebstemperatur von 350°C in der Lage, mit Luft vermischte Dämpfe von o-Xylol, Maleinsäureanhydrid, PSA, Tolylaldehyd und Phthalid vollständig zu verbrennen. Die Abluft enthält neben CO₂ noch Anteile an CO.

Die Verwendung von Palladiumoxid-dotiertem V₂O₅ in Verbindung mit Aluminiumoxid als Trägermaterial zur Partialoxidation von Ethylen zu Essigsäure ist z. B. aus der FR-PS 1,536,185 und der JP-PS 72 11,050 (C.A. 77: 33958) bekannt. Ähnlich aufgebaute Katalysatoren mit Al₂O₃ in der α- oder γ-Modifikation können aber durchaus auch zur Totaloxidation von Kohlenwasserstoffen und Kohlenmonoxid in molekularen Sauerstoff enthaltenden Abgasen eingesetzt werden. In der US-A 3,282,861 und US-A 3,438,721 sind beispielsweise Katalysatoren speziell zur Reinigung von Kraftfahrzeugabgasen beschrieben, die aus Al₂O₃, z. T. mit SiO₂ als Stabilisator, 2 - 10 Gew.-% V₂O₅, 2 - 10 Gew.-% CuO und 0,01 - 0,03 Gew.-% Pd bestehen und Anspringtemperaturen von 240 - 250°C besitzen. Ein ähnlich aufgebauter Katalysator aus einem mit PdCl₂, CuCl₂ und NH₄VO₃ getränkten Al₂O₃-Träger für die Oxidation von CO zu CO₂ wird in der EP-A 238700 beansprucht. Durch die Verwendung von Kupferverbindungen sind derartige Katalysatoren für industrielle Abgase, die beispielsweise Chlorid enthalten können, ungeeignet, da Kupferchlorid ausgetragen werden kann.

In der JP-A 61 120,640 (C.A. 106: 161975) und JP-A 62 193,648 (C.A. 108: 100457) sind Katalysatoren speziell für die Reinigung von Dieselmotorabgasen beansprucht, die durch Beschichtung eines Monolithen mit Al₂O₃, V₂O₅ und einer Pt-, Pd- oder Rh-Verbindung hergestellt werden. Katalysatoren zur CO-Oxidation in Gasmasken, die durch Reduktion eines calcinierten Al₂O₃/V₂O₅/PdO-Gemisches mit Hydrazin erhalten werden, sind beispielsweise aus der DE-OS 35 43 719 bekannt.

In der DE-A 3940758 wird ein Katalysator zur Reinigung von Dieselmotorabgasen beschrieben, der durch Beschichtung von mit Kanälen versehenen Trägern aus Keramik oder Metall mit Al₂O₃, TiO₂, SiO₂, Zeolith oder deren Gemischen und mit Vanadin sowie Platingruppenmetallen erhalten wird.

Die Totaloxidation von Benzol als Modellsubstanz für schwierig zu oxidierende aromatische Kohlenwasserstoffe in Gemischen mit Luft an derartigen Katalysatorpulvern ist beschrieben (Vassileva, M., Georgieva, S., Andreev, A., Kotsev, N., Shopov, D., Comp. Rend. Acad. Bulg. Sci. 36, 1547-1550 [1983]; Vassileva, M., Andreev, A., Dancheva, S., Kotsev, N., Appl. Catal. 49, 125-141 [1989]; Shopov, D., Andreev, A., Kotsev, N., Georgieva, S., Vassileva, M., Bulg. Pat. 39,145 [1983; zitiert in voranstehender Publikation]). Die Herstellung der Katalysatoren erfolgt durch Imprägnierung von γ-Al₂O₃ mit NH₄VO₃-Lösung, Trocknung, Calcinierung bei 500 - 520°C, Imprägnierung mit Na₂PdCl₄-Lösung, Trocknung und Aktivierung bei 300°C im Luftstrom. Der effektivste der getesteten Katalysatoren enthält neben Al₂O₃ 30 Gew.-% V₂O₅ und 0,5 Gew.-% Pd; bei 250°C wird eine unvollständige, bei 400°C eine vollständige Verbrennung des Benzols in einem übergeleiteten Benzol/Luft-Gemisch beobachtet. Vergleichbare Katalysatoren, die durch Verwendung von AgNO₃ anstelle des Na₂PdCl₄ präpariert wurden, bewirken ebenfalls die Totaloxidation von Benzol, zeigen jedoch eine niedrigere Wirksamkeit (Vassileva, M., Andreev, A., Dancheva, S., Appl. Catal. 69, 221-234 [1991]).

Die EP-A 432534 betrifft einen Katalysator zur oxidativen Reinigung der Abgase von Dieselmotoren mit auf feinteiligem Aluminiumoxid, Titanoxid, Siliziumoxid, Zeolith sowie deren Abmischungen aufgebrachten Vanadiumverbindungen und Platingruppenmetallen. Als besonders vorteilhaft werden als Trägermaterialien Abmischungen von Aluminiumoxid mit Titanoxid, Siliziumoxid und/oder Zeolith beschrieben. Während in den Beispielen der vorliegenden Anmeldung bereits bei einem Temperaturniveau von 185 bis 215°C Kohlenmonoxid bzw. Kohlenwasserstoffe vollständig zu CO₂ und H₂O oxidiert werden, werden mit den Katalysatoren aus der EP-A 432534, bei einem vergleichbaren Temperaturniveau von 210 bis 220°C, lediglich 50 % Konvertierung der Kohlenwasserstoffe bzw. des Kohlenmonoxids erreicht.

Die EP-A 547226 betrifft ein Verfahren zur Verbrennung von Organochlorverbindungen enthaltenden Abgasen, wobei als Katalysatorkomponente A Mischungen aus Oxiden von Si, Ti und Zr eingesetzt werden (Anspruch 1). In den Vergleichsbeispielen 2 und 3 wird als Komponente A TiO₂ eingesetzt, wobei die Halogenkohlenwasserstoff-Komponente nur unvollständig oxidiert wird.

KNV-Katalysatoren für die nahezu vollständige Totaloxidation von aromatischen Kohlenwasserstoffen in Abgasen auch in relativ niedrigen Konzentrationen besitzen nach dem Stand der Technik also Anspring(=Zünd)-temperaturen bzw. Betriebstemperaturen von mindestens 250°C, in der Regel aber 300°C und höher; die Oxidation von CO zu CO₂ bereitet unter diesen Bedingungen keine Probleme.

Es war daher die Aufgabe gestellt, Katalysatoren für die katalytische Nachverbrennung von Kohlenmonoxid und/oder von oxidierbaren organischen Verbindungen in molekularen Sauerstoff enthaltenden Prozeßabgasen, insbesondere Abgasen aus der PSA-Produktion, bereitzustellen, die gegen Katalysatorgifte wie Schwefel oder Chlorid weitgehend resistent sind und eine Anspring- bzw. Betriebstemperatur von ≦ 250°C, vorzugsweise ≦ 230°C, ermöglichen.

Gegenstand der Erfindung ist ein Verfahren zur katalytische Nachverbrennung von Kohlenmonoxid und/oder oxidierbare organische Verbindungen enthaltenden Abgasen aus der Phthalsäureanhydrid- und Maleinsäureanhydrid-Produktion, in Gegenwart von molekularem Sauerstoff und eines TiO₂-Trägerkatalysators, dadurch gekennzeichnet, daß der TiO₂-Trägerkatalysator,
a) mindestens 70 Gew.-%, gerechnet als TiO₂, einer Titandioxid-Komponente,
b) mindestens 1 Gew.-%, gerechnet als V₂O₅, einer Vanadiumoxid-Komponente aus der Gruppe umfassend Vanadiumoxide der Formel VₙO₂ₙ₊₁, VₙO₂ₙ oder VₙO₂ₙ₋₁ oder eine Vanadiumverbindung, die sich beim Erhitzen an der Luft in Vanadiumoxid umwandelt, und
c) 0,01 bis 0,9 Gew.-%, gerechnet als Edelmetall, eines oder mehrerer Edelmetalle aus der Gruppe Palladium, Platin, Rhodium, wobei die Edelmetalle auch als Oxide, Hydroxide, Säuren und/oder Chloride eingesetzt werden können, enthält.

Das Verfahren zeichnet sich durch eine niedrige Anspringtemperatur (Zündtemperatur) (≦ 220°C) bzw. Betriebstemperatur und dadurch aus, daß selbst geringe Beladungen des Abgases mit sauerstoffhaltigen oder -freien aliphatischen und aromatischen Kohlenwasserstoffen sowie Kohlenmonoxid, wie sie in den Abluftströmen von PSA-Anlagen vorliegen, in Gegenwart von molekularen Sauerstoff enthaltenden Gasen nahezu quantitativ zu den ökologisch wesentlich unbedenklicheren Produkten Kohlendioxid und Wasser oxidiert werden. Erstaunlich und nicht zu erwarten war dabei, daß die Substitution des Aluminiumoxids in Katalysatoren nach dem Stand der Technik der Zusammensetzung Al₂O₃/V₂O₅/Edelmetalloxid eines Edelmetalls der 8. Nebengruppe durch Titandioxid zu Katalysatoren mit deutlich verbessertem Eigenschaftsprofil bei der KNV von Prozeßabgasen, insbesonders aus der Phthalsäureanhydrid- und Maleinsäureanhydrid-Produktion, führt.

Als TiO₂-Komponente kann bei der Herstellung der Katalysatoren handelsübliches pulverförmiges TiO₂ in der Anatas- oder Rutilmodifikation oder Gemische aus Anatas und Rutil eingesetzt werden. TiO₂ kann auch durch Fällen aus titanylhaltiger Lösung und Erhitzen nach literaturbekannten Verfahren selbst hergestellt werden (siehe dazu Gmelins Handbuch der Anorganischen Chemie "Titan"; Verlag Chemie: Weinheim 1951, S. 79 ff.). TiO₂ mit einem Anatasgehalt von mindestens 50 Gew.-%, insbesondere von mindestens 65 Gew.-%, ist bevorzugt. Für die erfindungsgemäßen Katalysatoren sind Anatassorten mit einer BET-Oberfläche von mindestens 15 m²/g besonders bevorzugt, insbesonders mit einer BET-Oberfläche von 30 - 250 m²/g. Geeignet sind auch Mischungen aus derartigen oberflächenreichen Anatassorten, vorzugsweise Gemische aus Titandioxidhydrat (hydroxylgruppenreicher, mikrokristalliner Anatas) mit einer BET-Oberfläche von mehr als 100 m²/g und hydroxylgruppenarmem Anatas mit einer BET-Oberfläche von 5 - 11 m²/g oder Rutil mit einer BET-Oberfläche von 0,5 - 8 m²/g. Eine für die Erfindung besonders bevorzugte Titandioxidkomponente ist eine Mischung von 50 Gew.-% Anatas mit einem mittleren Korndurchmesser von 0,3 µm und einer BET-Oberfläche von 7 m²/g und 50 Gew.-% Titandioxidhydrat (als TiO₂ gerechnet) mit einem mittleren Korndurchmesser unter 0,01 µm und einer BET-Oberfläche von 150 m²/g. Das Gemisch besitzt eine BET-Oberfläche von 78 m²/g.

Als Vanadiumkomponente lassen sich bei der Katalysatorherstellung prinzipiell verschiedene Vanadiumoxide oder Vanadiumverbindungen, die sich beim Erhitzen an der Luft in Vanadiumoxide umwandeln, einzeln oder in Form von Gemischen einsetzen. Geeignete Vanadiumoxide sind Oxide der Formel VₙO₂ₙ₊₁, wie V₂O₅, V₃O₇, V₄O₉ und V₆O₁₃, Oxide der Formel VₙO₂ₙ, wie V₂O₄, und Oxide der Formel VₙO₂ₙ₋₁, wie V₂O₃, V₃O₅, V₄O₇, V₅O₉, V₆O₁₁ und V₇O₁₃; V₂O₅ ist bevorzugt. Die Herstellung derartiger Vanadiumoxide kann z. B. durch thermische Zersetzung von Ammoniummetavanadat, durch Erhitzen von Mischungen aus V₂O₃ und V₂O₅ oder durch Reduktion von V₂O₅ mit Schwefeldioxidgas erfolgen. Geeignete Vanadiumverbindungen, die sich beim Erhitzen an der Luft in ein Vanadiumoxid umwandeln, sind Ammoniummetavanadat, Vanadylsulfat, Vanadylchlorid, Vanadyldichloriddihydrat, Vanadyltrichlorid, weitere Vanadylhalogenide, Metavanadiumsäure, Pyrovanadiumsäure, Vanadiumhydroxid, Vanadylacetylacetonat oder Vanadylcarboxylate, wie Vanadylacetat oder Vanadyloxalat. Ammoniummetavanadat (NH₄VO₃) ist bevorzugt.

Geeignete Edelmetalle der 8. Nebengruppe des Periodensystems der Elemente sind Rhodium, Palladium, und Platin. Die Edelmetallzugabe erfolgt vorzugsweise in Form deren Verbindungen, beispielsweise als Oxid, Hydroxid, Säure, Chlorid. Es kann ein einziges Edelmetall in Form einer oder mehrerer Verbindungen eingesetzt werden. Die Zugabe von Gemischen aus Verbindungen mehrerer Edelmetalle ist ebenfalls möglich. Vorzugsweise wird Palladium oder ein Gemisch von Palladium mit Platin verwendet, wobei die Edelmetalle als Oxide, Hydroxide, Säuren und/oder Chloride eingesetzt werden. Besonders bevorzugt wird eine Palladiumverbindung als einzige Edelmetallkomponente eingesetzt, insbesonders Palladiumoxid. Die Zugabe der Edelmetallkomponente erfolgt in einer Menge von 0,01 - 0,9 Gew.-%, bevorzugt 0,05 - 0,5 Gew.%, bezogen auf das Gesamtgewicht der Aktivkomponenten und als Metall gerechnet. Höhere Anteile sind bei Bedarf möglich, allerdings vor allem aus Kostengründen nicht bevorzugt.

Die Katalysatoren, die unter Betriebsbedingungen eine durch Stickstoffadsorption bestimmte BET-Oberfläche bevorzugt zwischen 5 und 200 m²/g besitzen, bestehen vorzugsweise, unabhängig vom gewählten Herstellungsverfahren, aus 70 - 99 Gew.-% TiO₂, 1 - 30 Gew.-% V₂O₅ und 0,01 - 0,9 Gew.-%, gerechnet als Metall, Oxid von Palladium, Platin und/oder Rhodium. Besonders bevorzugt sind Katalysatoren aus 80 - 97 Gew.-% TiO₂ mit einem Anatasgehalt von mindestens 65 Gew.-%, 3 - 20 Gew.-% V₂O₅ und 0,05 - 0,5 Gew.-% Palladiumoxid, die unter Betriebsbedingungen eine BET-Oberfläche von 10 - 100 m²/g besitzen.

Die Herstellung der Katalysatoren kann auf an sich bekannte Art und Weise durch simultane Präparationsverfahren (Zusammenführen aller Komponenten in einem einzigen Arbeitsschritt) oder sequentielle Präparation (Zusammenführen der Komponenten in verschiedenen Arbeitsschritten, zwischen denen eine thermische und/oder chemische Behandlung des Katalysatorvorproduktes möglich ist) erfolgen.

Die simultane Herstellung der Katalysatoren ist beispielsweise durch Oberflächenbenetzung des TiO₂ durch mechanisches Vermischen oder Mahlen, beispielsweise in einer Kugel- oder Kolloidmühle, mit einem Vanadiumoxid, bevorzugt V₂O₅, oder einer Vanadiumverbindung, die sich beim Erhitzen an der Luft in ein Vanadiumoxid umwandelt, bevorzugt Ammoniummetavanadat, und der Edelmetallverbindung oder den Edelmetallverbindungen, bevorzugt in Gegenwart von Wasser, möglich. TiO₂ kann aber auch mit einer wäßrigen, die Vanadium-Komponente(n) enthaltenden Lösung, bevorzugt einer heißen gesättigten wäßrigen Ammoniummetavanadatlösung oder einer Lösung von V₂O₅ oder Ammoniummetavanadat in heißer wäßriger Oxalsäure, und der Edelmetallverbindung bzw. den Edelmetallverbindungen imprägniert werden. Die Gesamtmenge an zugegebener Vanadiumverbindung, gerechnet als V₂O₅, beträgt 1 - 30 Gew.-%, bevorzugt 3 - 20 Gew.-%. Nach erfolgter Vermischung oder Imprägnierung wird gegebenenfalls das Wasser abgedampft und das zurückbleibende pulverförmige Reaktionsprodukt durch 0,5- bis 16-stündiges Erhitzen bei 200 - 500°C im Luftstrom, bevorzugt 1- bis 8-stündiges Erhitzen bei 300 - 450°C, aktiviert.

Die Herstellung der Katalysatoren kann jedoch auch durch ein sequentielles Präparationsverfahren erfolgen in der Art, wie es in den US-Patentschriften 4,582,912 und 4,835,126 für Katalysatoren zur Partialoxidation von aromatischen Kohlenwasserstoffen zu den entsprechenden Carbonsäureanhydriden vorgeschlagen wird: Im ersten Schritt wird TiO₂ nach einem der oben beschriebenen Verfahren vorzugsweise mit V₂O₅ oder einer Verbindung, die beim Erhitzen in V₂O₅ übergeht, benetzt. Nach 1- bis 24-stündigem Erhitzen an der Luft bei 250 - 600°C, vorzugsweise 4- bis 20-stündigem Erhitzen bei 400 - 550°C, beispielsweise in einem Tiegel oder Drehrohrofen, wird das erhaltene Pulver in Gegenwart eines Vanadiumoxids oder einer Verbindung, die beim Erhitzen an der Luft in ein Vanadiumoxid übergeht, vorzugsweise in Gegenwart von V₂O₅, sowie einer Verbindung oder mehrerer Verbindungen Platin, Palladium oder Rhodium in Gegenwart oder Abwesenheit von Wasser vermischt bzw. zerrieben und, gegebenenfalls nach Trocknung, zur Aktivierung für einen Zeitraum von 0,5 - 16 Stunden bei 200 - 500°C, vorzugsweise von 1 - 8 Stunden bei 300 - 450°C, im Luftstrom erhitzt. Die insgesamt zugegebene Menge an Vanadiumverbindung(en), gerechnet als V₂O₅, verteilt sich auf den ersten und dritten Herstellungsschritt vorzugsweise im Verhältnis 4 : 1 bis 1 : 4 und beträgt insgesamt 1 - 30 Gew.-%, vorzugsweise 3 - 20 Gew.-%, als V₂O₅ gerechnet.

Bei der sequentiellen Herstellung der Katalysatoren nach dem oben beschriebenen Verfahren wird vorzugsweise der durch Benetzen des TiO₂ mit dem Vanadiumoxid oder der Vanadiumverbindung und Calcinieren präparierte Katalysatorvorläufer zum Entfernen des anhaftenden nicht chemisch gebundenen V₂O₅ mit einem geeigneten Lösungsmittel, vorzugsweise auf wäßriger Basis, behandelt. Geeignete Lösungsmittel sind dabei solche Lösungsmittel, die das anhaftende V₂O₅, nicht aber das chemisch gebundene Vanadiumoxid und/oder das TiO₂ aufnehmen, beispielsweise wäßrige Lösungen von Säuren und Basen. Gut geeignet sind beispielsweise wäßrige Lösungen von Ammoniak, Salzsäure, Oxalsäure, Ameisensäure und Essigsäure. Vorzugsweise wird halbkonzentrierte wäßrige Ammoniak- oder Oxalsäurelösung eingesetzt.

Das Auswaschen kann beispielsweise durch ein- oder mehrmaliges Rühren des Vorläufers im Lösungsmittel bei Raumtemperatur oder erhöhter Temperatur und sich anschließendem Filtrieren oder Abzentrifugieren und Trocknen erfolgen; gegebenenfalls wird mit destilliertem Wasser nachgewaschen. Die Weiterverarbeitung des ausgewaschenen Produktes kann durch Vermischen mit einem Vanadiumoxid oder einer Vanadiumverbindung sowie der Edelmetallverbindung oder den Edelmetallverbindungen, wie angegeben, oder durch Imprägnieren mit Vanadium- und Edelmetall-haltiger Lösung, gefolgt von Aktivierung im Luftstrom bei erhöhter Temperatur, erfolgen.

Für die Herstellung der Katalysatoren eignet sich besonders das sequentielle Präparationsverfahren unter Einbezug des Auswaschens des anhaftenden V₂O₅ nach dem ersten Calcinierungsschritt.

Dem Fachmann ist bekannt, daß sich TiO₂ in der Anatasmodifikation durch Dotierung mit gewissen Übergangsmetalloxiden gegen die Umwandlung in Rutil bzw. zu starke Agglomeration der Primärteilchen stabilisieren läßt. In diesem Zusammenhang bewähren sich Verbindungen von Yttrium, Lanthan, der Lanthanoidelemente und von Zirkonium, Hafnium, Niob, Tantal, Molybdän und Wolfram. Im Falle der Katalysatoren kann das eingesetzte TiO₂ in der Anatasmodifikation entweder vor seiner Verarbeitung oder - bei der sequentiellen Präparationsweise - während des ersten Herstellungsschrittes (Benetzen mit V₂O₅ oder einer Vanadiumverbindung) durch intensives Vermischen und Calcinieren mit der Übergangsmetallverbindung dotiert werden. Geeignete Einsatzformen sind die Oxide, Halogenide, Oxyhalogenide, Nitrate, Sulfate, Carbonate und Carboxylate der genannten Elemente. Die verwendete Menge sollte 5 Gew.-%, gerechnet als Oxid und bezogen auf das TiO₂ in der Anatasform, nicht überschreiten. Besonders bevorzugt ist die Stabilisierung der Anatasphase in den Totaloxidationskatalysatoren mit 0 - 2 Gew.-% Wolframtrioxid (WO₃), auf TiO₂ in der Anatasmodifikation bezogen; die Zugabe kann beispielsweise als WCl₆ oder WO₃ erfolgen.

Die Katalysatoren können als Vollkontakte in Form von Pulvern, Preßlingen oder Extrudaten für ihren Bestimmungszweck eingesetzt werden. Es besteht außerdem die Möglichkeit, anorganische hitzebeständige Trägerkörper wie poröse oder dichtgesinterte Kugeln oder Ringe sowie Pellets oder andere dreidimensionale poröse Trägermaterialien oder Wabenkörper bzw. mit Kanälen versehene Monolithe nach den üblichen Verfahren damit zu beschichten, um etwa den Druckwiderstand zu vermindern. Als Trägermaterialien eignen sich beispielsweise Steatit, Duranit, Cordierit, Mullit, Steingut, Porzellan, Siliciumdioxid, weitere Silicate, Aluminiumoxid, weitere Aluminate, Siliciumcarbid, Siliciumnitrid oder Gemische davon sowie Metallkörper aus Edelstahl oder sogenannten Heizleiterlegierungen (Cr/Fe/Al-Legierungen). Die Herstellung der Trägerkatalysatoren kann selbstverständlich nach dem Stand der Technik auch derart erfolgen, daß die Träger mit Titan-, Vanadium- und Edelmetall-haltigen Lösungen ein oder mehrmals imprägniert und anschließend calciniert werden. Erfolgt der Einsatz der Katalysatoren beispielsweise in gepreßter, extrudierter oder trägergestützter Form, kann die Aktivierung durch Erhitzen im Luftstrom auch erst nach der Formgebung erfolgen.

Die Katalysatoren eignen sich zur Reinigung von Abgasen aus der Phthalsäureanhydrid- und Maleinsäureanhydrid-Produktion durch katalytische Nachverbrennung.

Die Oxidation von Kohlenmonoxid, Kohlenwasserstoffe und/oder sonstige oxidierbare organische Verbindungen enthaltenden Abgasen aus der Phthalsäureanhydrid- und Maleinsäureanhydrid-Produktion kann in einer beliebigen molekularen Sauerstoff enthaltenden Atmosphäre, etwa Luft, bei erhöhter Temperatur durchgeführt werden. Beispielsweise leitet man die Abgase im Gemisch mit Luft über das Katalysatorbett, das bei 150 bis 550°C, vorzugsweise 150 bis 350°C, insbesonders 150 bis 250°C, gehalten wird. Die Anspringtemperaturen liegen vorzugsweise bei 150 bis 230°C. Die im Vergleich zu den Al₂O₃-haltigen Katalysatoren nach dem Stand der Technik niedrigeren Anspring- bzw. Betriebstemperaturen führen zu einer Energieeinsparung; auch bei niedrigen organischen Beladungen der Abluftströme kann die Betriebstemperatur teilweise ohne zusätzliche Energiezuführung gehalten werden.

Besonders geeignet ist das erfindungsgemäße Verfahren zur Reinigung von Abgasen aus Produktionsanlagen, in denen durch Gasphasenoxidation von o-Xylol und/oder Naphthalin Phthalsäureanhydrid (PSA) hergestellt wird, das vor allem in der Weichmacherindustrie weiterverarbeitet wird, und zur Reinigung von Abgasen aus der Maleinsäureanhydrid-Produktion. Typische Abgase aus PSA-Anlagen enthalten nach Desublimation der kondensierbaren Reaktionsprodukte - je nach Prozeßführung - etwa 77 Gew.-% Stickstoff und Edelgase, 15 - 19 Gew.-% Sauerstoff, 2 - 5 Gew.-% Wasser, 1,7 - 3 Gew.-% Kohlendioxid, 0,4 - 0,7 Gew.-% Kohlenmonoxid, 0,2 - 0,3 Gew.-% Maleinsäureanhydrid, je 0,02 - 0,04 Gew.-% PSA und Benzoesäure sowie 0,03 - 0,05 Gew.-% weiterer Stoffe wie o-Tolylaldehyd, o-Xylol und Formaldehyd. Während sich der Gehalt an PSA, Maleinsäureanhydrid und Benzoesäure durch eine nachgeschaltete wäßrige Wäsche weiter reduzieren läßt, können die Gehalte der Abluft beispielsweise an Kohlenmonoxid, o-Xylol, o-Tolylaldehyd und Formaldehyd zum Überschreiten der in einigen Ländern gesetzlich festgelegten Höchstgrenzen führen, was eine Abgasreinigung z. B. durch KNV notwendig macht. Darüber hinaus ist die Verbrennung dieser Bestandteile erforderlich, wenn die Prozeßluft nach dem Stand der Technik im Kreis geführt wird, was in einigen Fällen Vorteile wie niedrigeren Energieaufwand oder veränderte Explosionskenngrößen mit sich bringt.

Das erfindungsgemäße Verfahren ermöglicht bei Betriebstemperaturen von 150 bis 550°C, bevorzugt von 150 bis 350°C, insbesonders von 150 bis 250°C, eine nahezu quantitative Entfernung der genannten Verbindungen aus den Abluftströmen von PSA-Anlagen, die nach der katalytischen Nachverbrennung (KNV) neben Stickstoff, Sauerstoff und Edelgasen fast nur noch Kohlendioxid und Wasser enthalten; diese können somit bedenkenlos in die Atmosphäre geleitet bzw. der Reaktion bei Kreisfahrweise wieder zugeführt werden.

Die nachfolgenden Beispiele dienen zur weiteren Erläuterung der Erfindung.

### Beispiel 1

22,5 g getrocknetes TiO₂-Hydrat mit einer BET-Oberfläche von 150 m²/g (als TiO₂ gerechnet), 22,5 g Anatas mit einer BET-Oberfläche von 7 m²/g, 5,0 g V₂O₅ und 0,21 g PdCl₂ werden in Gegenwart von 200 ml Wasser in der Kolloidmühle intensiv verrieben. Nach Trocknen bei 110°C werden in einer hydraulischen Presse aus dem Katalysatorpulver Tabletten mit einer Dicke von 2 - 3 mm und einem Durchmesser von 4 mm gefertigt. Das freie Porenvolumen, das durch Quecksilberporosimetrie bestimmt wurde, beträgt 0,25 ml/g. Der fertige Katalysator enthält 10,0 Gew.-% V₂O₅ und 0,25 Gew.-% Pd, als Metall gerechnet, und besitzt nach 4-stündiger Aktivierung bei 350°C im Luftstrom eine BET-Oberfläche von 52 m²/g.

### Beispiel 2

Es wird vorgegangen wie in Beispiel 1 beschrieben, mit dem Unterschied, daß anstelle des TiO₂-Hydrat/Anatas-Gemisches 45,0 g TiO₂-Hydrat eingesetzt werden. Der fertige Katalysator enthält 10,0 Gew.-% V₂O₅ und 0,25 Gew.-% Pd, als Metall gerechnet, und besitzt nach 4-stündiger Aktivierung bei 350°C im Luftstrom eine BET-Oberfläche von 85 m²/g.

### Beispiel 3

Es wird vorgegangen wie in Beispiel 1 beschrieben, mit dem Unterschied, daß anstelle des TiO₂-Hydrat/Anatas-Gemisches 45,0 g einer TiO₂-Sorte eingesetzt werden, die zu 65 Gew.-% aus Anatas und zu 35 Gew.-% aus Rutil besteht und eine BET-Oberfläche von 55 m²/g besitzt. Der fertige Katalysator enthält 10,0 Gew.-% V₂O₅ und 0,25 Gew.-% Pd, als Metall gerechnet, und besitzt nach 4-stündiger Aktivierung bei 350°C im Luftstrom eine BET-Oberfläche von 39 m²/g.

### Beispiel 4

Der Katalysator wird nach einem sequentiellen Präparationsverfahren hergestellt:
21,5 g getrocknetes TiO₂-Hydrat mit einer BET-Oberfläche von 150 m²/g (als TiO₂ gerechnet), 21,5 g Anatas mit einer BET-Oberfläche von 7 m²/g und 7,0 g V₂O₅ werden in Gegenwart von 200 ml Wasser in der Kolloidmühle intensiv verrieben. Nach Trocknen bei 110°C und 16-stündigem Calcinieren bei 500°C wird der erhaltene Katalysatorvorläufer in der Kolloidmühle in Gegenwart von 200 ml Wasser zusammen mit 2,5 g V₂O₅ und und 0,22 g PdCl₂ verrieben und nach dem Trocknen in Tablettenform gepreßt. Der fertige Katalysator enthält 17,5 Gew.-% V₂O₅ und 0,25 Gew.-% Pd, als Metall gerechnet, und besitzt eine BET-Oberfläche von 15 m²/g.

### Beispiel 5

Beispiel 4 wird mit den aufgeführten Mengenangaben wiederholt mit dem Unterschied, daß der Katalysatorvorläufer zusätzlich nach dem Calcinieren einer Behandlung mit halbkonzentrierter wäßriger Ammoniaklösung bei Raumtemperatur unterzogen wird, bis das Waschwasser frei von Vanadationen ist. Es wird mit destilliertem Wasser nachgewaschen und getrocknet. Der fertige Katalysator besitzt nach dem Mahlen mit V₂O₅ und PdCl₂ einen V₂O₅-Gehalt von 8,0 Gew.-%, einen Pd-Gehalt von 0,28 Gew.-%, als Metall gerechnet, und eine BET-Oberfläche von 17 m²/g.

### Beispiel 6

Beispiel 5 wird wiederholt mit dem Unterschied, daß die Benetzung des TiO₂-Gemisches im ersten Arbeitsschritt durch Imprägnierung mit Ammoniummetavanadatlösung erfolgt: Ein gut homogenisiertes Gemisch aus 21,5 g getrocknetem TiO₂-Hydrat (als TiO₂ gerechnet) und 21,5 g Anatas wird durch Rühren mit einer heißen Lösung von 10,0 g NH₄VO₃ in 180 ml destilliertem Wasser imprägniert. An das Abdampfen des Lösungsmittels schließt sich eine 16-stündige Calcinierung bei 500°C, Mahlen mit 2,5 g V₂O₅ und 0,20 g PdCl₂ und nach dem Trocknen Pressen in Tablettenform an. Der fertige Katalysator enthält 8,2 Gew.-% V₂O₅ und 0,25 Gew.-% Pd, als Metall gerechnet, und besitzt eine BET-Oberfläche von 13 m²/g.

### Beispiel 7

Beispiel 6 wird wiederholt mit dem Unterschied, daß beim Imprägnieren des TiO₂-Gemisches in der NH₄VO₃-Lösung zusätzlich 1,0 g WCl₆ gelöst sind. Der fertige Katalysator enthält 8,1 Gew.-% V₂O₅, 1,3 Gew.-% WO₃ und 0,25 Gew.-% Pd, als Metall gerechnet, und besitzt eine BET-Oberfläche von 15 m²/g.

### Beispiel 8

Die nach den Beispielen 1 - 7 hergestellten Katalysatoren werden nach 4-stündiger Aktivierung bei 350°C im Luftstrom zur Totaloxidation von o-Xylol eingesetzt:
Als Reaktionsrohr dient ein horizontal in einem temperaturgesteuerten Röhrenofen angeordnetes Quarzrohr (Länge 450 mm, Innendurchmesser 15 mm), welches in der Ofenmitte 5,0 g Katalysatorpreßlinge (115 ± 15 Stück, Breite der Schüttung 22 ± 3 mm) und als Vorwärmzone 10,0 g unbeschichtete 4-mm-Steatitkugeln enthält; Preßlinge und Kugeln werden durch Quarzwollstopfen fixiert. Die Aktivierung der Katalysatoren wird jeweils durch 4-stündiges Erhitzen bei 350°C im Luftstrom im Reaktionsrohr durchgeführt. Die Beladung des Reaktionsgases erfolgt durch Einleiten von synthetischer Luft aus einer Druckflasche (80 Vol-% N₂, 20 Vol-% O₂) in auf 40°C erwärmtes o-Xylol mittels einer Glasfritte, was zu einer Beladung von 50 g o-Xylol pro Nm³ Luft führt. Die Durchflußmenge wird auf 9 l/Stunde eingestellt, die Raumgeschwindigkeit beträgt etwa 2300 h⁻¹. Desublimierbare Reaktionsprodukte werden in einem am Rohrende befestigten Glasabscheider kondensiert, flüchtige Reaktionsprodukte anschließend in einer Aceton-gefüllten Waschflasche und gasförmige Stoffe in einer Gasmaus aufgefangen; die Bestimmung der Zusammensetzung erfolgt jeweils gaschromatographisch. Folgende Resultate werden erzielt:
In allen Fällen sind oberhalb der Anspringtemperatur nur CO₂ und H₂O als Reaktionsprodukte nachzuweisen; folgende Anspringtemperaturen werden ermittelt:
- Katalysator aus Beispiel 1:: 215°C
- Katalysator aus Beispiel 2:: 205°C
- Katalysator aus Beispiel 3:: 220°C
- Katalysator aus Beispiel 4:: 200°C
- Katalysator aus Beispiel 5:: 205°C
- Katalysator aus Beispiel 6:: 190°C
- Katalysator aus Beispiel 7:: 185°C

### Vergleichsbeispiel 1

Es wird ein Katalysator analog Beispiel 1 in einem simultanen Präparationsverfahren, jedoch ohne Palladiumoxid-Dotierung hergestellt:
Ein Gemisch aus 20,0 g getrocknetem TiO₂-Hydrat (als TiO₂ gerechnet) mit einer BET-Oberfläche von 150 m²/g, 20,0 g Anatas mit einer BET-Oberfläche von 7 m²/g und 10,0 g V₂O₅ wird in Gegenwart von 200 ml destilliertem Wasser in einer Zahnkolloidmühle intensiv verrieben. Nach Trocknen bei 110°C werden aus dem erhaltenen Pulver, wie in Beispiel 1 beschrieben, Preßlinge hergestellt. Der fertige Katalysator enthält 20,0 Gew.-% V₂O₅ und besitzt nach 4-stündiger Aktivierung bei 350°C im Luftstrom eine durch Stickstoffadsorption bestimmte BET-Oberfläche von 48 m²/g.

### Vergleichsbeispiel 2

Wie in Vergleichsbeispiel 1 wird ein Gemisch aus 20,0 g getrocknetem TiO₂-Hydrat (als TiO₂ gerechnet), 20,0 g Anatas und 10,0 g V₂O₅ in Gegenwart von 200 ml destilliertem Wasser in einer Zahnkolloidmühle intensiv verrieben. An eine 16-stündige Calcinierung bei 500°C schließt sich, wie in Beispiel 4 beschrieben, eine Behandlung mit wäßriger Ammoniaklösung an. Das Pulver besitzt einen V₂O₅-Gehalt von 3,0 Gew.-% und eine BET-Oberfläche von 17 m²/g; es wird wie in Beispiel 1 angegeben zu Tabletten gepreßt.

### Vergleichsbeispiel 3

50,0 g V₂O₅ werden mit 0,4 g PdCl₂ in Gegenwart von Wasser in der Kolloidmühle vermischt, getrocknet und wie angegeben zu Tabletten gepreßt. Der fertige Katalysator enthält 0,48 Gew.-% Pd, als Metall gerechnet, und besitzt nach 4-stündiger Aktivierung bei 350°C im Luftstrom eine BET-Oberfläche von 8 m²/g.

### Vergleichsbeispiel 4

Es wird zunächst mit den angegebenen Mengen so vorgegangen, wie in Vergleichsbeispiel 2 beschrieben ist. An das Auswaschen mit Ammoniak schließt sich ein Mischen und nochmaliges Kolloidmahlen des Pulvers zusammen mit 2,5 g V₂O₅, 0,47 g Cu(NO₃)₂·6H₂O und 0,08 g PdCl₂, gefolgt von Trocknung und Formgebung durch Tablettieren, an. Der fertige Katalysator enthält 8,5 Gew.-% V₂O₅ sowie 0,22 Gew.-% Cu und 0,11 Gew.-% Pd, jeweils als Metall gerechnet, und besitzt eine BET-Oberfläche von 16 m²/g.

### Vergleichsbeispiel 5

Es wird so vorgegangen wie in Vergleichsbeispiel 4 angegeben mit der Ausnahme, daß anstelle der Cu- und Pd-Verbindungen 0,18 g AgNO₃ zum Einsatz kommen. Der fertige Katalysator enthält 8,6 Gew.-% V₂O₅ und 0,25 Gew.-% Ag, als Metall gerechnet, und besitzt eine BET-Oberfläche von 16 m²/g.

### Vergleichsbeispiel 6

Dieses Vergleichsbeispiel beschreibt den Einsatz der nach den Vergleichsbeispielen 1 - 5 hergestellten Katalysatoren zur Oxidation von o-Xylol analog der Vorgehensweise in Beispiel 8.

### Katalysator aus Vergleichsbeispiel 1:

Bei einer Reaktortemperatur von 180 - 220°C wird die Hauptmenge des verdampften o-Xylols in Aceton aufgefangen, bei 230 - 260°C lassen sich o-Xylol, PSA und Unteroxidationsprodukte wie o-Tolylaldehyd sowie CO und CO₂ und bei 270 - 350°C PSA, Maleinsäureanhydrid, CO und CO₂ nachweisen; die maximale PSA-Ausbeute, bezogen auf eingesetztes o-Xylol, beträgt 50 Gew.-% bei 290°C.

### Katalysator aus Vergleichsbeispiel 2:

Wie mit dem Katalysator aus Vergleichsbeispiel 1 tritt im unteren Temperaturbereich nahezu keine Reaktion auf, oberhalb von 250°C bildet sich neben PSA vor allem CO und CO₂ im Volumenverhältnis von etwa 1 : 2,5; die maximale PSA-Ausbeute beträgt 12 Gew.-% bei 300°C.

### Katalysator aus Vergleichsbeispiel 3:

Der Katalysator besitzt eine Anspringtemperatur (mindestens 95 %ige Verbrennung des o-Xylols zu CO₂) von 280°C; die Bildung von PSA und/oder CO kann nicht nachgewiesen werden.

### Katalysator aus Vergleichsbeispiel 4:

Der Katalysator besitzt eine Anspringtemperatur von 250°C; die Bildung von PSA und/oder CO kann nicht nachgewiesen werden.

### Katalysator aus Vergleichsbeispiel 5:

Es wird ein ähnliches Verhalten wie mit dem Katalysator aus Vergleichsbeispiel 1 festgestellt; die maximale PSA-Ausbeute beträgt 65 Gew.-% bei 270°C.

### Vergleichsbeispiel 7

Es wird ein Trägerkatalysator zur Gasphasenoxidation von o-Xylol zu PSA gemäß DE 21 06 796, Beispiel 4, hergestellt: 20,0 g getrocknetes TiO₂-Hydrat (als TiO₂ gerechnet), 60,0 g Anatas und 20,0 g V₂O₅ werden zusammen mit 25,0 g einer 50 Gew.-%igen wäßrigen Dispersion eines Vinylacetat/Vinyllaurat-Copolymers in 250 ml destilliertem Wasser suspendiert. In einer Beschichtungsapparatur werden 1000 g porenarme Steatitkugeln mit einem Durchmesser von jeweils 4 mm bei 110°C mit dieser Suspension beschichtet; die Aufbringausbeute, bezogen auf den oxidischen Feststoff, beträgt 95 Gew.-%. Die katalytisch aktive Oberflächenbeschichtung enthält 19,8 Gew.-% V₂O₅ und besitzt eine BET-Oberfläche, bestimmt nach 4-stündigem Glühen bei 400°C und Abschütteln der Beschichtung, von 32 m²/g.

### Vergleichsbeispiel 8

Das Reaktionsrohr der in Beispiel 8 beschriebenen Laborapparatur wird in der Ofenmitte mit 30,0 g des nach Vergleichsbeispiel 7 hergestellten PSA-Katalysators und auf der Reaktoreingangsseite mit 10,0 g unbeschichteten 4-mm-Steatitkugeln gefüllt; die Fixierung der Schüttungen erfolgt mittels Quarzwollestopfen. Bei einem Durchfluß von 9 l/h und einer o-Xylol-Beladung von 50 g/Nm³ Luft werden bei einer Reaktortemperatur von 350°C 95 Gew.-% PSA, bezogen auf eingesetztes o-Xylol, aufgefangen. Die Abluft enthält 1,3 Vol-% CO₂, 0,5 Vol-% CO und 200 mg/Nm³ organische Bestandteile.

### Beispiel 9

Vergleichsbeispiel 8 wird wiederholt mit der Änderung, daß hinter dem PSA-Katalysator an der Reaktorauslaßseite 5,0 g des nach Beispiel 7 hergestellten Totaloxidationskatalysators angebracht werden. In der Abluft lassen sich nur CO₂ und H₂O nachweisen; sämtliche Reaktionsprodukte der PSA-Herstellung werden am Katalysator verbrannt.

### Beispiel 10

Es wird folgender Laboraufbau erstellt: Ein Röhrenofen, der 30,0 g des PSA-Katalysator aus Vergleichbeispiel 7 enthält, wird mit einem zweiten Röhrenofen kombiniert, der 5,0 g des Totaloxidationskatalysators aus Beispiel 7 enthält; vor beiden Katalysatoren ist eine Vorwärmzone aus jeweils 10,0 g unbeschichteten 4-mm-Steatitkugeln angebracht. Ein o-Xylol/Luft-Gemisch, das 50 g o-Xylol/Nm³ enthält, wird mit einem Volumenstrom von 9 l/h über den bei 350°C temperierten PSA-Katalysator geleitet. Nach Desublimation des PSA-Rohproduktes wird das Reaktionsgas bei einer Betriebstemperatur von 200°C über den Katalysator geleitet. In der Abluft lassen sich neben 1,9 Vol-% CO₂ keine kohlenstoffhaltigen Bestandteile nachweisen.

## Patentansprüche

1. Verfahren zur katalytischen Nachverbrennung von Kohlenmonoxid und/oder oxidierbare organische Verbindungen enthaltenden Abgasen aus der Phthalsäureanhydrid- und Maleinsäureanhydrid-Produktion in Gegenwart von molekularem Sauerstoff und eines TiO₂-Trägerkatalysators, dadurch gekennzeichnet, daS der TiO₂-Trägerkatalysator
a) mindestens 70 Gew.-%, gerechnet als TiO₂, einer Titandioxid-Komponente
b) mindestens 1 Gew.-%, gerechnet als V₂O₅, einer Vanadiumoxid-Komponente aus der Gruppe umfassend Vanadiumoxide der Formel VₙO₂ₙ₊₁, VₙO₂ₙ oder VₙO₂ₙ₋₁ oder eine Vanadiumverbindung, die sich beim Erhitzen an der Luft in Vanadiumoxid umwandelt, und
c) 0,01 bis 0,9 Gew.-%, gerechnet als Edelmetall, eines oder mehrerer Edelmetalle aus der Gruppe Palladium, Platin, Rhodium, wobei die Edelmetalle auch als Oxide, Hydroxide, Säuren und/oder Chloride eingesetzt werden können, enthält.

2. Verfahren nach Anspruch 1, dadurch gekennzeichnet, daß als Edelmetallkomponente eine oder mehrere aus der Gruppe Palladium, Platin und deren Oxide, Hydroxide, Säuren und/oder Chloride eingesetzt werden.

3. Verfahren nach Anspruch 1 oder 2, dadurch gekennzeichnet, daß die Titanoxidkomponente mit bis zu 5 Gew.-%, bezogen auf TiO₂ in der Anatasmodifikation, von Verbindungen von Yttrium, Lanthan, der Lanthanoidelemente, Zirkonium, Hafnium, Niob, Tantal, Molybdän oder Wolfram dotiert ist.

4. Verfahren nach Anspruch 3, dadurch gekennzeichnet, daß als Dotierungsmittel 0,1 - 5 Gew.-%, bezogen auf TiO₂ in der Anatasmodifikation, Wolframoxid oder einer Verbindung, die beim Erhitzen in Wolframoxid übergeht, enthalten ist.

5. Verfahren nach Anspruch 1 bis 4, dadurch gekennzeichnet, daß der Katalysator in Form von homogenen Preßlingen oder Extrudaten, oder Form eines mit den Komponenten a) bis c) beschichteten unporösen oder porösen, gegebenenfalls wabenförmigen oder mit Kanälen versehenen Trägerkörpers eingesetzt wird.

6. Verfahren nach Anspruch 1 bis 5, dadurch gekennzeichnet, daß die katalytische Nachverbrennung bei Betriebstemperaturen zwischen 150 und 550°C und Anspringtemperaturen zwischen 150 und 230°C erfolgt.

## Claims

1. Process for the catalytic afterburning of exhaust gases from the phthalic anhydride and maleic anhydride production containing carbon monoxide and/or oxidizable organic compounds in the prescence of molecular oxygen and a TiO₂ supported catalyst, characterized in that the TiO₂ supported catalyst contains
a) at least 70 % by weight, calculated as TiO₂, of a titanium dioxide component,
b) at least 1 % by weight, calculated as V₂O₅, of a vanadium oxide component selected from the group consisting of vanadium oxides of the formula VₙO₂ₙ₊₁, VₙO₂ₙ or VₙO₂ₙ₋₁ or a vanadium compound which is converted into vanadium oxide on heating in air and
c) 0.01 to 0.9 % by weight, calculated as noble metal, of one or more noble metals selected from the group consisting of palladium, platinum and rhodium, where the noble metals can also be used as oxides, hydroxides, acids and/or chlorides.

2. Process according to Claim 1, characterized in that as noble metal component, use is made of one or more selected from the group consisting of palladium, platinum and their oxides, hydroxides, acids and/or chlorides.

3. Process according to Claim 1 or 2, characterized in that the titanium oxide component is doped with up to 5 % by weight, based on TiO₂ in the anatase form, of compounds of yttrium, lanthanum, the lanthanide elements, zirconium, hafnium, niobium, tantalum, molybdenum or tungsten.

4. Process according to Claim 3, characterized in that the doping compound contained is 0.1 - 5 % by weight, based on TiO₂ in the anatase form, of tungsten oxide or a compound which is converted into tungsten oxide on heating.

5. Process according to Claim 1 to 4, characterized in that the catalyst is used in the form of homogeneous mouldings or extrudates or in the form of a non-porous or porous honeycomb-like support body, or support body provided with ducts, which is coated with the components a) to c).

6. Process according to Claim 1 to 5, characterized in that the catalytic afterburning is carried out at operating temperatures between 150 and 550°C and kick-off temperatures between 150 and 230°C.

## Revendications

1. Procédé de postcombustion catalytique de gaz brûlés contenant de l'oxyde de carbone et/ou des composants organiques oxydables, en provenance de la production d'anhydride de l'acide phtalique ou d'anhydride de l'acide maléique en présence d'oxygène moléculaire et d'un catalyseur de support TiO₂, caractérisé en ce que le catalyseur de support TiO₂ contient
a) au moins 70 % en poids, calculé en tant que TiO₂, d'un composant de dioxyde de titane,
b) d'au moins 1 % en poids, calculé en tant que V₂O₅, d'un composé d'oxyde de vanadium du groupe comprenant les oxydes de vanadium de formule VₙO₂ₙ₊₁, VₙO₂ₙ ou VₙO₂ₙ₋₁, ou d'un composé du vanadium, qui se transforme par chauffage à l'air en oxyde de vanadium, et
c) de 0,01 à 0,9 % en poids, calculé en tant que métal noble, d'un ou de plusieurs métaux nobles du groupe palladium, platine, rhodium, les métaux nobles pouvant aussi être utilisés en tant qu'oxydes, hydroxydes, acides et/ou chlorures.

2. Procédé selon la revendication 1, caractérisé en ce que l'on utilise, en tant que composants de métal noble, un ou plusieurs métaux du groupe palladium, platine, et leurs oxydes, hydroxydes, acides, et/ou chlorures.

3. Procédé selon la revendication 1 ou 2, caractérisé en ce que le composant d'oxyde de titane est dopé jusqu'à 5 % en poids, par rapport au TiO₂ dans la modification anatase, de composés de l'yttrium, du lanthane, des éléments lanthanides, du zirconium, du hafnium, du niobium, du tantale, du molybdène ou du tungstène.

4. Procédé selon la revendication 3, caractérisé en ce qu'est contenu, en tant qu'agent de dopage, de 0,1 - 5 % en poids, par rapport au TiO₂ dans la modification anatase, d'oxyde de tungstène ou d'un composé qui se convertit par chauffage en oxyde de tungstène.

5. Procédé selon la revendication 1 à 4, caractérisé en ce que le catalyseur est utilisé sous la forme de comprimés ou d'extrudats, ou sous la forme d'un corps support non poreux ou poreux, revêtu des composants a) à c), le cas échéant sous forme de nids d'abeille ou pourvu de canaux.

6. Procédé selon la revendication 1 à 5, caractérisé en ce que la postcombustion catalytique se fait à des températures de fonctionnement comprises entre 150 et 550°C et des températures de démarrage comprises entre 150 et 230°C.
